# EUROPEAN PATENT APPLICATION

(11) **EP 4 485 170 A1**
(43) Date of publication of application: **01.01.2025**
(21) Application number: 23778207.3
(22) Date of filing: 28.03.2023
(51) Int. Cl.: G06F 8/30

(54) **METHOD FOR DETERMINING COMPILE OPTIMIZATION OPTION, ELECTRONIC DEVICE AND READABLE STORAGE MEDIUM**

(30) Priority: 28.03.2022 CN 202210315215
(71) Applicant: ZTE Corporation, Shenzhen Guangdong 518057 (CN)
(72) Inventor: CHENG, Shengyu, Shenzhen, Guangdong 518057 (CN); HE, Hongjun, Shenzhen, Guangdong 518057 (CN); WANG, Shilong, Shenzhen, Guangdong 518057 (CN); TANG, Yuke, Shenzhen, Guangdong 518057 (CN); FENG, Dongsheng, Shenzhen, Guangdong 518057 (CN); CAO, Jicheng, Shenzhen, Guangdong 518057 (CN); YE, Ming, Shenzhen, Guangdong 518057 (CN); PENG, Xinghai, Shenzhen, Guangdong 518057 (CN); CHEN, Yuanfan, Shenzhen, Guangdong 518057 (CN); HE, Yazhou, Shenzhen, Guangdong 518057 (CN)
(74) Representative: Canzler & Bergmeier Patentanwälte Partnerschaft mbB
(86) International application number: PCT/CN2023/084388
(87) International publication number: WO 2023/185842

(57) **Abstract**

The present application provides a method for determining a compile optimization option, an electronic device, and a computer-readable storage medium. The method comprises: splitting a first source code into at least one second source code according to a preset splitting level; and obtaining feature information corresponding to each second source code, and inputting the feature information corresponding to each second source code into a pre-trained prediction model to obtain a first compile optimization option corresponding to each second source code.

## Description

### CROSS-REFERENCE TO RELATED APPLICATIONS

The present application claims priority from Chinese patent application CN 202210315215.7 titled "METHOD FOR DETERMINING COMPILE OPTIMIZATION OPTION, ELECTRONIC DEVICE and READABLE STORAGE MEDIUM" filed on March 28, 2022, the entire contents of which are incorporated herein by reference.

### TECHNICAL FIELD

Embodiments of the present application relate to the technical field of software engineering, and particularly relate to a method for determining a compile optimization option, an electronic device, and a computer-readable storage medium.

### BACKGROUND

With an increasing optimization capability, modern compilers can perform more deep optimization on the complied codes during the compiling process, so that the compiled products have better runtime performance, for example, lower memory resource consumption during runtime, higher running speed, and the like. However, the compilers are also becoming more and more complex. For example, the commonly used GNU compiler collection (GCC) has up to 200 ~ 400 compile optimization options, where the same compile optimization option may have different optimization effects for different codes, different optimization options may have different optimization effects for the same code, and superposition of a plurality of different compile optimization options can also achieve different optimization effects. For a given source code, determining which compile optimization options enable the best possible runtime performance of the compiled output product involves the combined application of hundreds of compile optimization options. Theoretically, assuming that each compile optimization option has only two states (i.e., abled or disabled), the search space for the optimal compile optimization option combination is 2^{200∼400}, which is far beyond the control capability of even the best software engineer. However, many compile optimization options have more than two states, and may take various different values. For example, the option "-fvect-cost-model" may take the values "unlimited", "dynamic" and "cheap". In other words, the actual search space will be larger than 2^{200∼400}, which makes it more difficult to find the optimal compile optimization option combination.

In addition, for a large software project, typically only one compile optimization option combination is used, or at most different compile optimization option combinations are applied for different subdirectories. However, a large software project often contains thousands of files, and it is impossible to apply the same compile optimization option combination to all files, resulting in a poor running performance of the software project as a whole.

### SUMMARY

Embodiments of the present application provide a method for determining a compile optimization option, an electronic device, and a computer-readable storage medium.

In a first aspect, an embodiment of the present application provides a method for determining a compile optimization option, including: splitting a first source code into at least one second source code according to a preset splitting level; obtaining feature information corresponding to each second source code; and inputting the feature information corresponding to each second source code into a pre-trained prediction model to obtain a first compile optimization option corresponding to each second source code.

In a second aspect, an embodiment of the present application provides an electronic device, including: at least one processor; and a memory having at least one program stored thereon which, when executed by the at least one processor, causes the method for determining a compile optimization option according to the present application to be implemented.

In a third aspect, an embodiment of the present application provides a computer-readable storage medium having a computer program stored thereon which, when executed by a processor, causes the method for determining a compile optimization option according to the present application to be implemented.

### BRIEF DESCRIPTION OF DRAWINGS

FIG. 1 is a block diagram of a conventional compiler in the related art;
FIG. 2 is a block diagram of a smart compiler according to an embodiment of the present application;
FIG. 3 is another block diagram of a smart compiler according to an embodiment of the present application;
FIG. 4 is a flowchart of a method for determining a compile optimization option according to an embodiment of the present application;
FIG. 5 is a flowchart of a model training method according to an embodiment of the present application;
FIG. 6 is a block diagram of an apparatus for determining a compile optimization option according to an embodiment of the present application; and
FIG. 7 is a block diagram of a model training apparatus according to an embodiment of the present application.

### DETAIL DESCRIPTION OF EMBODIMENTS

To improve understanding of the technical solutions of the present application for those skilled in the art, the method for determining a compile optimization option, the electronic device, and the computer-readable storage medium according to the present application will be described below in detail in conjunction with the accompanying drawings.

Exemplary embodiments will be described more thoroughly below with reference to the accompanying drawings, but which may be embodied in different forms and should not be construed as limited to the embodiments set forth herein. Rather, these embodiments are provided so that the present application will be thorough and complete, and will fully convey the scope of the present application to those skilled in the art.

The embodiments of the present application and features thereof may be combined with each other as long as they are not contradictory.

As used herein, the term "and/or" includes any and all combinations of at least one associated listed item.

The terminology used herein is for the purpose of describing specific embodiments only and is not intended to limit the present application. As used herein, the singular forms "a", "an" and "the" are intended to include the plural forms as well, unless the context clearly indicates otherwise. It will be further understood that as used herein, the terms "comprise" and/or "consist of ..." specify the presence of the stated features, integers, steps, operations, elements, and/or components, but do not preclude the presence or addition of at least one other feature, integer, step, operation, element, component, and/or group thereof.

Unless otherwise defined, all terms (including technical terms and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present application, and will not be interpreted in an idealized or overly formal sense unless expressly so defined herein.

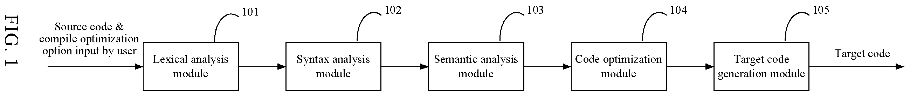

Before describing the method for determining a compile optimization option according to the embodiment of the present application, a program compiling process by a conventional compiler is firstly described. As shown in FIG. 1, the conventional compiler includes: a lexical analysis module 101, a syntax analysis module 102, a semantic analysis module 103, a code optimization module 104, and a target code generation module 105.

When a source code and a compile optimization option input by a user are input into the conventional compiler, the syntax analysis module 102 outputs an abstract syntax tree (AST) of the source code. The semantic analysis module 103 outputs a control flow graph (CFG) and a data flow graph (DFG). After passing through the lexical analysis module 101, the syntax analysis module 102, and the semantic analysis module 103, the compile optimization option input by the user is input into the code optimization module 104. The code optimization module 104 performs code optimization according to the AST, the CFG, the DFG, the compile optimization option input by the user, and a default compile optimization option. The target code generation module 105 generates a target code according to an optimization result, where the target code is an output product obtained by compiling the source code.

In some exemplary embodiments of the present application, the conventional compiler is modified by adding a plug-in 106 between the semantic analysis module 103 and the code optimization module 104 of the conventional compiler, obtaining a smart compiler provided in an embodiment of the present application.

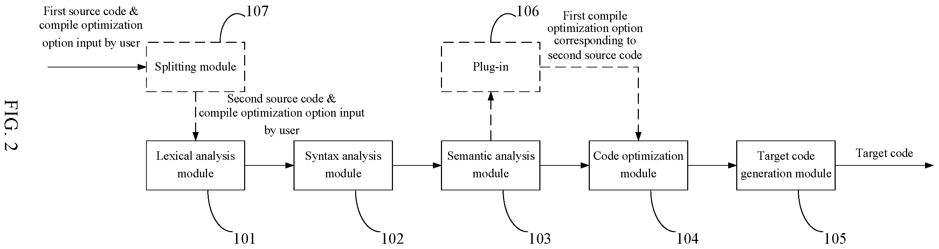

As shown in FIG. 2, with the added plug-in 106, a first compile optimization option corresponding to a second source code (obtained by splitting the input first source code) can be predicted. That is, the plug-in 106 implements the function of the prediction model described below. In addition, before entering the lexical analysis module 101, the input first source code is split into at least one second source code according to a preset splitting level, so that the lexical analysis module 101, the syntax analysis module 102 and the semantic analysis module 103 analyze the second source code instead of the first source code. In an exemplary implementation, a splitting module 107 may be added before the lexical analysis module 101 to implement the splitting function, as shown in FIG. 2.

In other exemplary embodiments of the present application, the prediction model may be implemented by a code instead of the plug-in. That is, the code for implementing the prediction model is merged with the code of the conventional compiler.

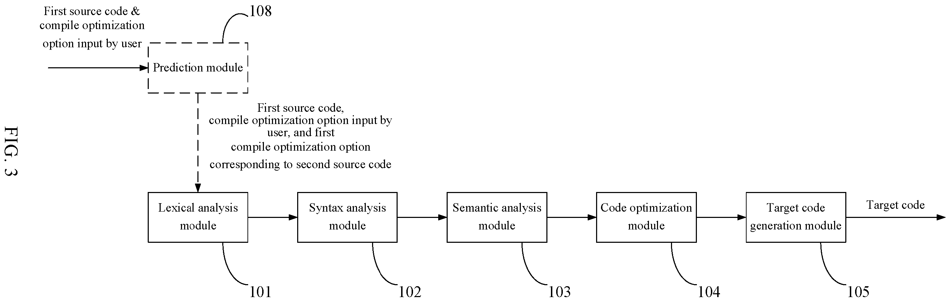

In other exemplary embodiments of the present application, the conventional compiler is modified by adding a prediction module 108 before the lexical analysis module 101 of the conventional compiler, obtaining a smart compiler provided in an embodiment of the present application. As shown in FIG. 3, the prediction module 108 is configured to implement a method for determining a compile optimization option according to an embodiment of the present application.

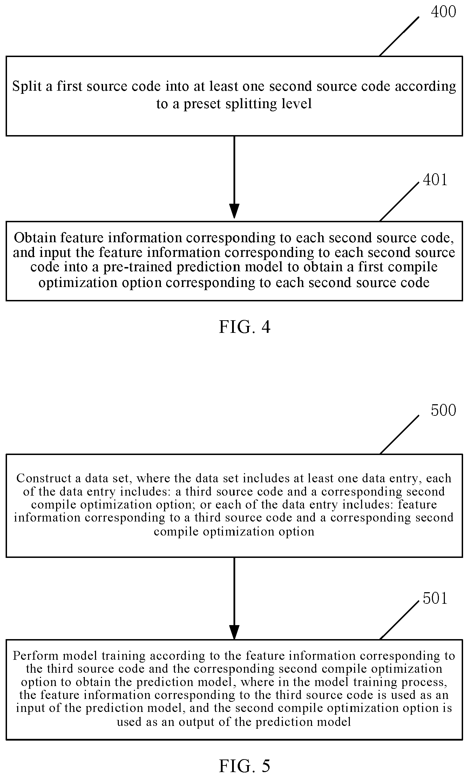

FIG. 4 is a flowchart of a method for determining a compile optimization option according to an embodiment of the present application.

Referring to FIG. 4, an embodiment of the present application provides a method for determining a compile optimization option, which may include the following operations 400 to 401.

At operation 400, splitting a first source code into at least one second source code according to a preset splitting level.

In an embodiment of the present application, the first source code may include all source codes in one or more files, which may include at least one of the source codes for one or more functions and data structure definitions and variable declarations.

In an embodiment of the present application, the splitting level may be set according to the actual situation. In some exemplary embodiments, the preset splitting level includes a file level, and the second source code includes source codes in the same file; or the preset splitting level includes a function level, and the second source code includes source codes in the same function.

In some exemplary embodiments, the splitting level may be preset by a user, or may be set by default.

At operation 401, obtaining feature information corresponding to each second source code, and inputting the feature information corresponding to each second source code into a pre-trained prediction model to obtain a first compile optimization option corresponding to each second source code.

In some exemplary embodiments, the feature information includes at least one of: AST; or CFG and DFG.

In some exemplary embodiments, the AST corresponding to the second source code may be obtained by performing lexical analysis and syntax analysis on the second source code, and the CFG and the DFG corresponding to the second source code may be obtained by performing lexical analysis, syntax analysis, and semantic analysis on the second source code.

According to some exemplary embodiments of the present application, by applying the first compile optimization option corresponding to the second source code to the compiling of the second source code, an optimization effect much better than the default compile optimization option (such as -02, -03, or the like) of the compiler can be obtained.

In some exemplary embodiments, the feature information corresponding to each second source code is input into a pre-trained prediction model to obtain a first compile optimization option corresponding to each second source code. In other exemplary embodiments, the feature information corresponding to each second source code and target runtime environment information corresponding to the second source code are input into a pre-trained prediction model, to obtain a first compile optimization option corresponding to each second source code.

In an embodiment of the present application, the target runtime environment information corresponding to the second source code refers to runtime environment information of an output product obtained by compiling the first source code. In some exemplary embodiments, the target runtime environment information includes: hardware information and operating system environment information.

In some exemplary embodiments, the hardware information includes at least one of: a central processing unit (CPU) type or a cache capacity.

In some exemplary embodiments, the operating system environment information includes at least one of: an operating system (OS) type or an OS version number.

In some exemplary embodiments, after inputting the feature information corresponding to each second source code into the pre-trained prediction model to obtain the first compile optimization option corresponding to each second source code (i.e., operation 401), the method further includes: performing code optimization on each second source code according to the first compile optimization option corresponding to the second source code.

In some exemplary embodiments, code optimization is performed on each second source code according to the first compile optimization option corresponding to the second source code. In other exemplary embodiments, code optimization is performed on each second source code according to the first compile optimization option corresponding to the second source code and a third compile optimization option input by a user. The third compile optimization option input by the user may be customized by the user.

In an embodiment of the present application, different second source codes may correspond to the same first compile optimization option, or correspond to different first compile optimization options. Under a condition that different second source codes correspond to different first compile optimization options, different second source codes are compiled with different first compile optimization options.

In some exemplary embodiments, before splitting the first source code into at least one second source code according to the preset splitting level (i.e., operation 400), the method further includes: constructing a data set, where the data set includes at least one data entry, each of the data entry includes: a third source code and a corresponding second compile optimization option; obtaining feature information corresponding to the third source code in each data entry; and performing model training according to the feature information corresponding to the third source code and the corresponding second compile optimization option to obtain the prediction model, where in the model training process, the feature information corresponding to the third source code is used as an input of the prediction model, and the second compile optimization option is used as an output of the prediction model.

In some exemplary embodiments, before splitting the first source code into at least one second source code according to the preset splitting level (i.e., operation 400), the method further includes: constructing a data set, where the data set includes at least one data entry, each of the data entry includes: feature information corresponding to a third source code and a corresponding second compile optimization option; and performing model training according to the feature information corresponding to the third source code and the corresponding second compile optimization option to obtain the prediction model, where in the model training process, the feature information corresponding to the third source code is used as an input of the prediction model, and the second compile optimization option is used as an output of the prediction model.

According to some exemplary embodiments of the present application, by applying the second compile optimization option corresponding to the third source code to the compiling of the third source code, an optimization effect much better than the default compile optimization option (such as -02, -03, or the like) of the compiler can be obtained. For example, as shown in table 1 below, when the output products obtained by compiling the third source code prog1 with the second compile optimization options -falign-functions, -falign-labels, -fwrapv -fwrapv-pointer ... run in a target runtime environment (x86CPU, 32MB cache, an OS of linux-4.9.299), runtime performance better than that of the conventional compile optimization options such as -03 can be obtained.

In some exemplary embodiments, the data entry further includes: target runtime environment information corresponding to the third source code; and performing model training according to the feature information corresponding to the third source code and the corresponding second compile optimization option to obtain the prediction model includes: performing model training according to the feature information corresponding to the third source code and the corresponding second compile optimization option, as well as the target runtime environment information corresponding to the third source code, to obtain the prediction model, where in the model training process, the feature information corresponding to the third source code and the target runtime environment information corresponding to the third source code are used as inputs of the prediction model, and the second compile optimization option is used as an output of the prediction model.

For example, the data set shown in table 1 has n data entries, each of which includes: a third source code, target runtime environment information, and a second compile optimization option.

**Table 1**

| Third source code | Target runtime environment information | | | | Second compile optimization option |
|---|---|---|---|---|---|
| | CPU type | Cache capacity | OS type | OS version number | |
| prog1 | x86 | 32MB | linux | 4.9.299 | -falign-functions, -falign-labels, -fwrapv -fwrapv-pointer ... |
| prog2 | x86 | 32MB | linux | 4.14.264 | -faggressive-loop-optimizatio ns, -falign-loops, -fwrapv -fwrapv-pointer ... |
| ... | ... | ... | ... | ... | ... |
| progn | arm | 64MB | ubuntu | 16.04LTS | -ftree-builtin-call-dce, -ftree-loop-distribution, -ftree-sink ... |

In an embodiment of the present application, the training of the prediction model may be implemented by a model training method known to those skilled in the art.

In some exemplary embodiments, performing model training according to the feature information corresponding to the third source code and the corresponding second compile optimization option to obtain the prediction model includes: inputting the feature information corresponding to the third source code in each data entry into the prediction model, to obtain a predicted value of the corresponding compile optimization option; calculating a loss function value according to the predicted value of the compile optimization option corresponding to the third source code and the second compile optimization option corresponding to the third source code; adjusting connection weights among neurons in the prediction model by a back propagation algorithm such as stochastic gradient descent; and further performing the operation of inputting the feature information corresponding to the third source code in each data entry into the adjusted prediction model to obtain the predicted value of the corresponding compile optimization option, until the loss function value satisfies a preset condition.

In other exemplary embodiments, performing model training according to the feature information corresponding to the third source code and the corresponding second compile optimization option, as well as the target runtime environment information corresponding to the third source code, to obtain the prediction model includes: inputting the feature information corresponding to the third source code in each data entry and the target runtime environment information corresponding to the third source code into the prediction model, to obtain a predicted value of the corresponding compile optimization option; calculating a loss function value according to the predicted value of the compile optimization option corresponding to the third source code and the second compile optimization option corresponding to the third source code; adjusting connection weights among neurons in the prediction model by a back propagation algorithm such as stochastic gradient descent; and further performing the operation of inputting the feature information corresponding to the third source code in each data entry and the target runtime environment information corresponding to the third source code into the adjusted prediction model to obtain the predicted value of the corresponding compile optimization option, until the loss function value satisfies a preset condition.

In some exemplary embodiments, the third source code includes: source codes in the same file; or source codes in the same function.

In an embodiment of the present application, the third source codes in all data entries of the data set for model training are source codes in the same file; or the third source codes in all data entries of the data set for model training are source codes in the same function; or the third source codes in some data entries of the data set for model training are source codes in the same file, while the third source codes in other data entries are source codes in the same function. This is not limited in the embodiments of the present application.

In an embodiment of the present application, the target runtime environment information corresponding to the third source code refers to runtime environment information of an output product obtained by compiling the third source code. In some exemplary embodiments, the target runtime environment information includes: hardware information and operating system environment information.

In some exemplary embodiments, the hardware information includes at least one of: a central processing unit (CPU) type or a cache capacity.

In some exemplary embodiments, the operating system environment information includes at least one of: an operating system (OS) type or an OS version number.

In some exemplary embodiments, the prediction model may be any machine learning model known to those skilled in the art, such as a recurrent neural network, a fully-connected neural network, a graph neural network, a hybrid neural network, or the like.

In some exemplary embodiments, the output of the prediction model is a vector, the number of elements in the vector is the same as the number of compile optimization options in the compiler, and a value of an element of the vector represents a state value of a corresponding compile optimization option. For example, as shown in table 2, the compiler GCC-9.2.0 supports 243 compile optimization options, so the output of the prediction model is a vector containing 243 elements, where the value of each element represents a state value of a compile optimization option corresponding to the element.

In an embodiment of the present application, each compile optimization option of the compiler may be numbered, and a serial number of the compile optimization option is the same as a subscript of the element corresponding to that compile optimization option. The subscript, as well as the serial number of the compiled optimization option, may start with 0, as shown in table 2. The vector in the first row of table 1 may be represented by (0, 1, 0, 1, 0 ... 0, 1). That is, the elements numbered 1, 3 and 242 are denoted by 1, while the remaining elements are denoted by 0. It is assumed here that each compile optimization option has only two states, on and off, with 1 indicating on and 0 indicating off.

**Table 2**

| No. | Compile optimization option |
|---|---|
| 0 | -faggressive-loop-optimiz ations |
| 1 | -falign-functions |
| 2 | -falign-jumps |
| 3 | -falign-labels |
| 4 | -falign-loops |
| 5 | -fassociative-math |
| ... | ... |
| 242 | -fwrapv -fwrapv-pointer |

In some exemplary embodiments, the state value of the compile optimization option may include two state values, on and off, or may include other possible state values. For example, the option "-fvect-cost-model" may take three state values, "unlimited", "dynamic" and "cheap".

According to the method for determining a compile optimization option provided in the embodiments of the present application, the first source code is split according to a preset splitting level to obtain at least one second source code, and a first compile optimization option corresponding to each second source code is predicted individually for each second source code according to a pre-trained prediction model, instead for the first source code as a whole, so that more refined optimization of the compile optimization option can be implemented, and the compiled output product corresponding to the software project has better runtime performance. Moreover, the prediction based on the pre-trained prediction model does not need many times of compiling on the software project or running a program to capture data, so that the optimization time of the compile optimization option is shortened, and the optimization efficiency is improved.

FIG. 5 is a flowchart of a model training method according to an embodiment of the present application.

Referring to FIG. 5, an embodiment of the present application provides a model training method, which may include following operations 500 to 501.

At operation 500, constructing a data set, where the data set includes at least one data entry, each of the data entry includes: a third source code and a corresponding second compile optimization option; or each of the data entry includes: feature information corresponding to a third source code and a corresponding second compile optimization option.

In some exemplary embodiments, the data entry further includes: target runtime environment information corresponding to the third source code. For example, the data set shown in table 1 has n data entries, each of which includes: a third source code, target runtime environment information, and a second compile optimization option; or each of which includes: feature information corresponding to a third source code, target runtime environment information, and a second compile optimization option.

In an embodiment of the present application, the target runtime environment information corresponding to the third source code refers to runtime environment information of an output product obtained by compiling the third source code. In some exemplary embodiments, the target runtime environment information includes: hardware information and operating system environment information.

In some exemplary embodiments, the hardware information includes at least one of: a CPU type or a cache capacity.

In some exemplary embodiments, the operating system environment information includes at least one of: an OS type or an OS version number.

In some exemplary embodiments, the third source code includes: source codes in the same file; or source codes in the same function.

In an embodiment of the present application, the third source codes in all data entries of the data set for model training are source codes in the same file; or the third source codes in all data entries of the data set for model training are source codes in the same function; or the third source codes in some data entries of the data set for model training are source codes in the same file, while the third source codes in other data entries are source codes in the same function. This is not limited in the embodiments of the present application.

In some exemplary embodiments, each data entry includes: a third source code, target runtime environment information, and a second compile optimization option, and obtaining feature information corresponding to the third source code in each data entry.

In some exemplary embodiments, the feature information includes at least one of: AST; or CFG and DFG.

At operation 501, performing model training according to the feature information corresponding to the third source code and the corresponding second compile optimization option to obtain the prediction model, where in the model training process, the feature information corresponding to the third source code is used as an input of the prediction model, and the second compile optimization option is used as an output of the prediction model.

In some exemplary embodiments, performing model training according to the feature information corresponding to the third source code and the corresponding second compile optimization option to obtain the prediction model (i.e., operation 501) includes: performing model training according to the feature information corresponding to the third source code and the corresponding second compile optimization option, as well as the target runtime environment information corresponding to the third source code, to obtain the prediction model, where in the model training process, the feature information corresponding to the third source code and the target runtime environment information corresponding to the third source code are used as inputs of the prediction model, and the second compile optimization option is used as an output of the prediction model.

In an embodiment of the present application, the training of the prediction model may be implemented by a model training method known to those skilled in the art.

In some exemplary embodiments, performing model training according to the feature information corresponding to the third source code and the corresponding second compile optimization option to obtain the prediction model includes: inputting the feature information corresponding to the third source code in each data entry into the prediction model, to obtain a predicted value of the corresponding compile optimization option; calculating a loss function value according to the predicted value of the compile optimization option corresponding to the third source code and the second compile optimization option corresponding to the third source code; adjusting connection weights among neurons in the prediction model by a back propagation algorithm such as stochastic gradient descent; and further performing the operation of inputting the feature information corresponding to the third source code in each data entry into the adjusted prediction model to obtain the predicted value of the corresponding compile optimization option, until the loss function value satisfies a preset condition.

In other exemplary embodiments, performing model training according to the feature information corresponding to the third source code and the corresponding second compile optimization option, as well as the target runtime environment information corresponding to the third source code, to obtain the prediction model includes: inputting the feature information corresponding to the third source code in each data entry and the target runtime environment information corresponding to the third source code into the prediction model, to obtain a predicted value of the corresponding compile optimization option; calculating a loss function value according to the predicted value of the compile optimization option corresponding to the third source code and the second compile optimization option corresponding to the third source code; adjusting connection weights among neurons in the prediction model by a back propagation algorithm such as stochastic gradient descent; and further performing the operation of inputting the feature information corresponding to the third source code in each data entry and the target runtime environment information corresponding to the third source code into the adjusted prediction model to obtain the predicted value of the corresponding compile optimization option, until the loss function value satisfies a preset condition.

In some exemplary embodiments, the prediction model may be any machine learning model known to those skilled in the art, such as a recurrent neural network, a fully-connected neural network, a graph neural network, a hybrid neural network, or the like.

In some exemplary embodiments, the output of the prediction model is a vector, the number of elements in the vector is the same as the number of compile optimization options in the compiler, and a value of an element of the vector represents a state value of a corresponding compile optimization option. For example, as shown in table 2, the compiler GCC-9.2.0 supports 243 compile optimization options, so the output of the prediction model is a vector containing 243 elements, where the value of each element represents a state value of a compile optimization option corresponding to the element.

In an embodiment of the present application, each compile optimization option of the compiler may be numbered, and a serial number of the compile optimization option is the same as a subscript of the element corresponding to that compile optimization option. The subscript, as well as the serial number of the compiled optimization option, may start with 0, as shown in table 2. The vector in the first row of table 1 may be represented by (0, 1, 0, 1, 0 ... 0, 1). That is, the elements numbered 1, 3 and 242 are denoted by 1, while the remaining elements are denoted by 0. It is assumed here that each compile optimization option has only two states, on and off, with 1 indicating on and 0 indicating off.

In some exemplary embodiments, the state value of the compile optimization option may include two state values, on and off, or may include other possible state values. For example, the option "-fvect-cost-model" may take three state values, "unlimited", "dynamic" and "cheap".

An embodiment of the present application further provides an electronic device, including: at least one processor; and a memory having at least one program stored thereon which, when executed by the at least one processor, causes any method for determining a compile optimization option as described above, or any model training method as described above to be implemented.

The processor is a device with a data processing capability, including but not limited to a central processing unit (CPU), or the like; and the memory is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH).

In some embodiments, the processor and the memory are connected to each other via a bus, and further connected to other components of a computing device.

An embodiment of the present application further provides a computer-readable storage medium having a computer program stored thereon which, when executed by a processor, causes any method for determining a compile optimization option as described above, or any model training method as described above to be implemented.

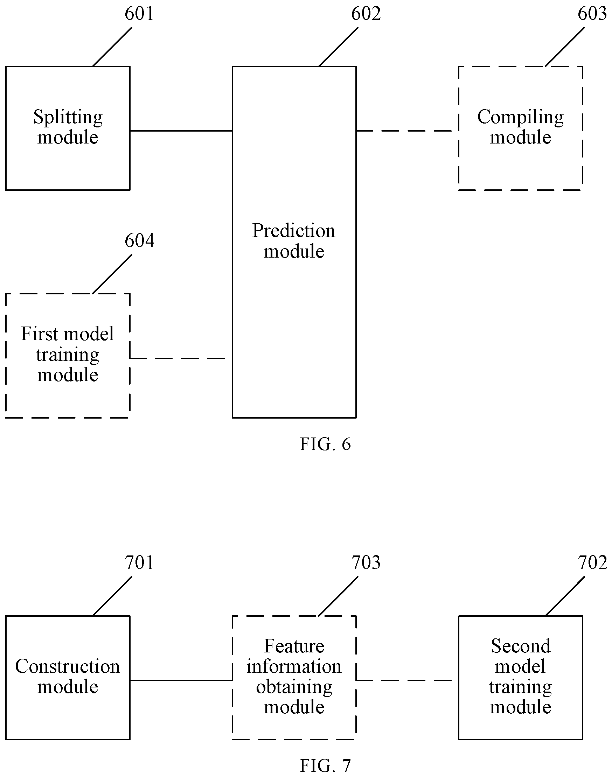

FIG. 6 is a block diagram of an apparatus for determining a compile optimization option according to an embodiment of the present application.

Referring to FIG. 6, an embodiment of the present application provides an apparatus for determining a compile optimization option, including: a splitting module 601 configured to split a first source code into at least one second source code according to a preset splitting level; and a prediction module 602 configured to obtain feature information corresponding to each second source code, and input the feature information corresponding to each second source code into a pre-trained prediction model to obtain a first compile optimization option corresponding to each second source code.

In some exemplary embodiments, the apparatus for determining a compile optimization option further includes: a compiling module 603 configured to perform code optimization on each second source code according to the first compile optimization option corresponding to the second source code.

In some exemplary embodiments, the apparatus for determining a compile optimization option further includes: a first model training module 604 configured to: construct a data set, where the data set includes at least one data entry, each of the data entry includes: a third source code and a corresponding second compile optimization option; obtain feature information corresponding to the third source code in each data entry; and perform model training according to the feature information corresponding to the third source code and the corresponding second compile optimization option to obtain the prediction model, where in the model training process, the feature information corresponding to the third source code is used as an input of the prediction model, and the second compile optimization option is used as an output of the prediction model.

In some exemplary embodiments, the first model training module 604 is configured to: construct a data set, where the data set includes at least one data entry, each of the data entry includes: feature information corresponding to a third source code and a corresponding second compile optimization option; perform model training according to the feature information corresponding to the third source code and the corresponding second compile optimization option to obtain the prediction model, where in the model training process, the feature information corresponding to the third source code is used as an input of the prediction model, and the second compile optimization option is used as an output of the prediction model.

In some exemplary embodiments, the data entry further includes: target runtime environment information corresponding to the third source code, and the first model training module 604 is configured to: perform model training according to the feature information corresponding to the third source code and the corresponding second compile optimization option, as well as the target runtime environment information corresponding to the third source code, to obtain the prediction model, where in the model training process, the feature information corresponding to the third source code and the target runtime environment information corresponding to the third source code are used as inputs of the prediction model, and the second compile optimization option is used as an output of the prediction model.

In some exemplary embodiments, the third source code includes: source codes in the same file; or source codes in the same function.

In some exemplary embodiments, the splitting level includes a file level, and the second source code includes source codes in the same file; or the splitting level includes a function level, and the second source code includes source codes in the same function.

In some exemplary embodiments, the feature information includes at least one of: AST; or CFG and DFG.

In some exemplary embodiments, the prediction module 602 is configured to: input the feature information corresponding to each second source code and target runtime environment information corresponding to the second source code into a pre-trained prediction model, to obtain the first compile optimization option corresponding to each second source code.

In some exemplary embodiments, the target runtime environment information includes: hardware information and operating system environment information.

The specific implementation process of the apparatus for determining a compile optimization option is the same as that of the method for determining a compile optimization option in the foregoing embodiments, and is not repeated here.

FIG. 7 is a block diagram of a model training apparatus according to an embodiment of the present application.

Referring to FIG. 7, an embodiment of the present application provides a model training apparatus, including: a construction module 701 configured to construct a data set, where the data set includes at least one data entry, each of the data entry includes: a third source code and a corresponding second compile optimization option; or each of the data entry includes: feature information corresponding to a third source code and a corresponding second compile optimization option; and a second model training module 702 configured to: perform model training according to the feature information corresponding to the third source code and the corresponding second compile optimization option to obtain the prediction model, where in the model training process, the feature information corresponding to the third source code is used as an input of the prediction model, and the second compile optimization option is used as an output of the prediction model.

In some exemplary embodiments, the data entry further includes: target runtime environment information corresponding to the third source code, and the second model training module 702 is configured to: perform model training according to the feature information corresponding to the third source code and the corresponding second compile optimization option, as well as the target runtime environment information corresponding to the third source code, to obtain the prediction model, where in the model training process, the feature information corresponding to the third source code and the target runtime environment information corresponding to the third source code are used as inputs of the prediction model, and the second compile optimization option is used as an output of the prediction model.

In some exemplary embodiments, the target runtime environment information includes: hardware information and operating system environment information.

In some exemplary embodiments, the third source code includes: source codes in the same file; or source codes in the same function.

In some exemplary embodiments, the model training apparatus further includes: a feature information obtaining module 703 configured to obtain feature information corresponding to the third source code in each data entry.

In some exemplary embodiments, the feature information includes at least one of: AST; or CFG and DFG.

The specific implementation process of the model training apparatus is the same as that of the model training method in the foregoing embodiments, and is not repeated here.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic memories, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present application as set forth in the appended claims.

## Claims

1. A method for determining a compile optimization option, comprising:
splitting a first source code into at least one second source code according to a preset splitting level;
obtaining feature information corresponding to each second source code; and
inputting the feature information corresponding to each second source code into a pre-trained prediction model to obtain a first compile optimization option corresponding to each second source code.

2. The method for determining a compile optimization option according to claim 1, further comprising:
performing code optimization on each second source code according to the first compile optimization option corresponding to the second source code.

3. The method for determining a compile optimization option according to claim 1, wherein before splitting the first source code into at least one second source code according to the preset splitting level, the method further comprises:
constructing a data set, wherein the data set comprises at least one data entry, each of the data entry comprises: a third source code and a corresponding second compile optimization option;
obtaining feature information corresponding to the third source code in each data entry; and
performing model training according to the feature information corresponding to the third source code and the corresponding second compile optimization option to obtain the prediction model, wherein in the model training process, the feature information corresponding to the third source code is used as an input of the prediction model, and the second compile optimization option is used as an output of the prediction model.

4. The method for determining a compile optimization option according to claim 1, wherein before splitting the first source code into at least one second source code according to the preset splitting level, the method further comprises:
constructing a data set, wherein the data set comprises at least one data entry, each of the data entry comprises: feature information corresponding to a third source code and a corresponding second compile optimization option; and
performing model training according to the feature information corresponding to the third source code and the corresponding second compile optimization option to obtain the prediction model, wherein in the model training process, the feature information corresponding to the third source code is used as an input of the prediction model, and the second compile optimization option is used as an output of the prediction model.

5. The method for determining a compile optimization option according to claim 3 or 4, wherein the data entry further comprises: target runtime environment information corresponding to the third source code, and
performing model training according to the feature information corresponding to the third source code and the corresponding second compile optimization option to obtain the prediction model comprises:
performing model training according to the feature information corresponding to the third source code and the corresponding second compile optimization option, as well as the target runtime environment information corresponding to the third source code, to obtain the prediction model, wherein in the model training process, the feature information corresponding to the third source code and the target runtime environment information corresponding to the third source code are used as inputs of the prediction model, and the second compile optimization option is used as an output of the prediction model.

6. The method for determining a compile optimization option according to claim 3 or 4, wherein the third source code comprises:
source codes in the same file; or source codes in the same function.

7. The method for determining a compile optimization option according to any one of claims 1 to 4, wherein
the preset splitting level comprises a file level, and the second source code comprises source codes in the same file; or
the preset splitting level comprises a function level, and the second source code comprises source codes in the same function.

8. The method for determining a compile optimization option according to any one of claims 1 to 4, wherein inputting the feature information corresponding to each second source code into a pre-trained prediction model to obtain the first compile optimization option corresponding to each second source code comprises:
inputting the feature information corresponding to each second source code and target runtime environment information corresponding to the second source code into a pre-trained prediction model, to obtain the first compile optimization option corresponding to each second source code.

9. The method for determining a compile optimization option according to claim 8, wherein the target runtime environment information comprises: hardware information and operating system environment information.

10. An electronic device, comprising:
at least one processor; and
a memory having at least one program stored thereon which, when executed by the at least one processor, causes the method for determining a compile optimization option according to any one of claims 1 to 9 to be implemented.

11. A computer-readable storage medium having a computer program stored thereon which, when executed by a processor, causes the method for determining a compile optimization option according to any one of claims 1 to 9 to be implemented.
